# EUROPÄISCHE PATENTSCHRIFT

(11) **EP 4 337 924 B1**
(45) Veröffentlichungstag und Bekanntmachung des Hinweises auf die Patenterteilung: **12.02.2025**
(21) Anmeldenummer: 22728085.6
(22) Anmeldetag: 05.05.2022
(51) Int. Cl.: G01G 19/08

(54) **VERFAHREN ZUM ERMITTELN EINER FAHRZEUGMASSE EINES SELBSTFAHRENDEN FAHRZEUGES, ZENTRAL-STEUEREINHEIT SOWIE SELBSTFAHRENDES FAHRZEUG**
METHOD FOR DETERMINING THE MASS OF A SELF DRIVING VEHICLE, A CENTRAL CONTROL UNIT AND A SELF DRIVING VEHICLE
PROCÉDÉ D'ESTIMATION DE LA MASSE D'UN VEHICULE AUTONOME, UNE UNITÉ DE CONTRÔLE CENTRALE ET UN VEHICULE AUTONOME

(30) Priorität: 11.05.2021 DE 102021112239
(43) Veröffentlichungstag der Anmeldung: 20.03.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2022/062093
(87) Internationale Veröffentlichungsnummer: WO 2022/238222

(56) Entgegenhaltungen:
- DE-A1- 102008 037 083
- GB-A- 2 576 800

## Beschreibung

Die Erfindung betrifft ein Verfahren zum Ermitteln einer Fahrzeugmasse eines selbstfahrenden Fahrzeuges, insbesondere Nutzfahrzeuges, eine Zentral-Steuereinheit zur Durchführung des Verfahrens, sowie ein selbstfahrendes Fahrzeug mit einer derartigen Zentral-Steuereinheit.

Die Verfügbarkeit einer möglichst genauen Fahrzeugmasse eines selbstfahrenden Fahrzeuges, bestehend zumindest aus einem Zugfahrzeug und ggf. mindestens einem Anhänger oder Auflieger, ist für eine genaue und sichere Planung und Regelung der Soll-Trajektorie, auf der sich das autonom betriebene Fahrzeug bewegen soll bzw. bewegt, von hoher Bedeutung. Um die Fahrzeugmasse abzuschätzen, ist normalerweise in einer zentralen Bremssteuerung eines elektronischen Bremssystems des selbstfahrenden Fahrzeuges ein Algorithmus zur Massenabschätzung vorgesehen. In Abhängigkeit der abgeschätzten Fahrzeugmasse werden dann Einstellungen im Bremsenmanagement des elektronischen Bremssystems gesetzt und insbesondere auch Entscheidungen für Schwellwerte eines RSC-Systems (RSC, Roll Stability Control) getroffen. Auch beim Antriebsmanagement des selbstfahrenden Fahrzeuges wird auf die abgeschätzte Fahrzeugmasse zurückgegriffen.

Die Abschätzung der Fahrzeugmasse erfolgt dabei herkömmlicherweise gemäß dem zweiten Newtonschen Gesetz (F = M x A) während der Fahrt, wobei die interne Kraft (F), eine Antriebskraft oder eine Bremskraft, beispielsweise aus einem Motordrehmoment unter Berücksichtigung weiterer Fahrzeugparameter (z.B. einer Anzahl an Fahrzeugachsen) sowie der Verluste im Antriebsstrang oder aus dem Bremsenmanagement folgt und die Fahrzeug-Beschleunigung (A) aus einer Raddrehzahl der Räder abgeleitet wird. Da insbesondere die interne Kraft aber auch die Beschleunigung von einer Reihe von nichtbeobachteten Einflussfaktoren abhängig ist, ist diese Ermittlung der Fahrzeugmasse mit Ungenauigkeiten behaftet, wobei Störgrößen bzw. Störkräfte nur in speziellen Fahrsituationen abgeschätzt werden können.

In DE 10 2008 037 083 A1 ist dazu beispielsweise vorgesehen, die Fahrzeugmasse aus einem gemessenen Bremsdruck und einer gemessenen Fahrzeug-Beschleunigung (Verzögerung) zu ermitteln, so dass nur auf wenige fehlerbehaftete Kenngrößen zurückzugreifen ist. In EP 2 215 438 B1 ist vorgesehen, eine Fahrzeugmasse anhand von Gewichtsklassen abzuschätzen, in der das Fahrzeug mit der aktuellen Last fällt. In EP 3 003 814 B1 ist weiterhin vorgesehen, unter Berücksichtigung des Leistungssatzes in Abhängigkeit der kinetischen Energie sowie der Antriebsleistung die Fahrzeugmasse abzuschätzen. Dabei ist vorgesehen, die Geschwindigkeit und die Antriebsleistung des Fahrzeuges an zwei kurzzeitig aufeinanderfolgenden Zeitpunkten zu ermitteln, um auch bei unbekannten Fahrwiderständen (Steigung, Rollwiderstand, Luftwiderstand) den Leistungssatz lösen zu können und damit unbekannte Ungenauigkeiten herauszurechnen.

Zudem ist normalerweise einen fortlaufende Masseermittlung vorgesehen, da insbesondere in manuell betriebenen Fahrzeugen keine Trigger-Ereignisse, die auf eine Änderung der Fahrzeugmasse, bei Nutzfahrzeugen insbesondere eine Beladungsänderung, hinweisen, zur Verfügung stehen oder nicht gezielt darauf zurückgegriffen wird. Daher wird in bisherigen Systemen fortlaufend davon ausgegangen, dass sich die Fahrzeugmasse geändert haben könnte, so dass auch fortlaufend eine aktuelle Masseermittlung erfolgt.

Um dies zu vermeiden, ist in DE 10 2019 103 968 A1 vorgesehen, als Betriebs-Informationen des Fahrzeuges eine Sitzbelegung oder eine Gurtsicherung heranzuziehen, um auf ein Trigger-Ereignis für die Veränderung einer Fahrzeugmasse zu schließen. In dem Fall wird die Fahrzeugmasse neu bestimmt. Auch in DE 10 2017 001 911 A1 ist vorgesehen, eine Sitzbelegung und/oder eine Tankfüllung und/oder ein Nickwinkel des Fahrzeuges vor und nach einem Halt zu vergleichen und bei einer signifikanten Abweichung die Masse zu korrigieren. Eine Abschätzung von Ungenauigkeiten oder Störkräften findet dabei nicht statt. Aufgrund des ermittelten Trigger-Ereignisses wird lediglich die Fahrzeugmasse nach bekannten Algorithmen neu ermittelt.

Das Dokument GB 2 576 800 A offenbart einen selbstfahrenden Gepäckwagen.

Ausgehend davon ist die Aufgabe der Erfindung, ein Verfahren zum Abschätzen einer Fahrzeugmasse eines selbstfahrenden Fahrzeuges anzugeben, mit dem die Fahrzeugmasse genau und mit wenig Aufwand abgeschätzt werden kann. Aufgabe der Erfindung ist weiterhin, eine Zentral-Steuereinheit und ein selbstfahrendes Fahrzeug anzugeben.

Diese Aufgabe wird durch ein Verfahren, eine Zentral-Steuereinheit und ein selbstfahrendes Fahrzeug gemäß den unabhängigen Ansprüchen gelöst. Die Unteransprüche geben bevorzugte Weiterbildungen an.

Erfindungsgemäß ist demnach ein Verfahren zum Ermitteln einer Fahrzeugmasse eines selbstfahrenden Fahrzeuges, das mindestens in einer Automatisierungsstufe 4 oder höher (gemäß der Norm SAE J3016) betrieben wird, vorgesehen, wobei in dem Verfahren bei Vorliegen eines Trigger-Ereignisses, das auf eine wahrscheinliche Änderung der Fahrzeugmasse hinweist, gezielt ein Einlern-Betriebsmodus aktiviert wird, wobei das selbstfahrende Fahrzeug in dem Einlern-Betriebsmodus gezielt, beispielweise für festgelegte Zeiträume, abwechselnd in einer ersten Phase und in einer zweiten Phase betrieben wird, wobei durch eine automatisierte Ansteuerung des elektronischen Antriebssystems und/oder des elektronischen Bremssystems -- in der ersten Phase eine interne Kraft mit einem ersten Kraft-Wert, vorzugsweise eine Antriebskraft über das elektronische Antriebssystem oder eine Verzögerungskraft über das elektronische Bremssystem, und
-- in der zweiten Phase eine interne Kraft mit einem zweiten Kraft-Wert auf das selbstfahrende Fahrzeug ausgeübt wird, wobei sich der erste Kraft-Wert von dem zweiten Kraft-Wert unterscheidet; und
   - Ermitteln einer in den Phasen wirkenden Störkraft, wobei sich die Störkraft von der internen Kraft, die aktiv z.B. durch den Antrieb oder die Bremsen des Fahrzeuges bewirkt wird, unterscheidet; und
   - Ermitteln der Fahrzeugmasse in Abhängigkeit der Fahrzeug-Beschleunigung und der internen Kraft, die jeweils in der jeweiligen Phase vorliegen, sowie in Abhängigkeit der ermittelten bzw. abgeschätzten Störkraft. Die Störkraft kann dabei unter Umständen Null sein, wenn in den jeweiligen Phasen keine Störkraft auf das selbstfahrende Fahrzeug wirkt.

Erfindungsgemäß sind weiterhin eine Zentral-Steuereinheit zur Durchführung des erfindungsgemäßen Verfahrens sowie ein selbstfahrendes Fahrzeug mit einer derartigen Zentral-Steuereinheit sowie einem elektronischen Bremssystem und einem elektronischen Antriebssystem vorgesehen, in dem das erfindungsgemäße Verfahren zur Anwendung kommen kann.

Vorteilhafterweise wird also in einem selbstfahrenden Fahrzeug, das mindestens in der Autonomiestufe 4 betrieben wird, die Sensordichte und damit die Informationsdichte ausgenutzt, um zunächst festzustellen bzw. zu bewerten, ob das selbstfahrende Fahrzeug im Betrieb seine Fahrzeugmasse geändert haben könnte. Mit dieser Bewertung bzw. dem Vorliegen eines Trigger-Ereignisses, kann dann anschließend gezielt ein Einlern-Betriebsmodus eingeleitet bzw. aktiviert werden, um die Fahrzeugmasse des selbstfahrenden Fahrzeuges möglichst genau zu ermitteln. Dadurch ist eine gute Planbarkeit der Soll-Trajektorie gegeben, die in Abhängigkeit der Fahrzeugmasse festgelegt wird. Aber auch im aktuellen Fahrgeschehen können instabile Fahrzustände genauer und zuverlässiger ermittelt und darauf reagiert werden, wenn die exakte Fahrzeugmasse bekannt ist.

Da lediglich auf das Trigger-Ereignis hin eine Abschätzung der Fahrzeugmasse erfolgt, ist der Verarbeitungsaufwand minimiert. Dabei wird erfindungsgemäß ausgenutzt, dass die zuletzt ermittelte Fahrzeugmasse in einem selbstfahrenden Fahrzeug nicht ständig zu validieren bzw. auf eine Änderung hin nachzuprüfen ist. Infolge der hohen Sensordichte in einem selbstfahrenden Fahrzeug stehen nämlich ausreichend Betriebs-Informationen zur Verfügung, die auf eine Änderung der Fahrzeugmasse hinweisen können, so dass auch nur dann eine Neuermittlung der Fahrzeugmasse tatsächlich durchzuführen ist. Ein dauerhaftes Anzweifeln der Gültigkeit der Fahrzeugmasse ist demnach in einem selbstfahrenden Fahrzeug nicht nötig. Dennoch kann vorgesehen sein, dass auch im Fahr-Betriebsmodus in regelmäßigen Abständen zumindest eine Plausibilisierung der Fahrzeugmasse stattfindet, was dann jedoch nicht durch einen gezielten Eingriff in das elektronische Bremssystem und/oder elektronische Antriebssystem erfolgt, sondern "nebenbei" im normalen Fahrbetrieb.

Im Einlern-Betriebsmodus wird das Fahrverhalten des Fahrzeuges in den sich abwechselnden ersten und zweiten Phasen derartig eingestellt, dass unbekannte bzw. nicht ermittelte oder nicht ermittelbare Störgrößen bzw. Störkräfte abgeschätzt und anhand dessen eine Masseermittlung möglichst genau erfolgen kann. Dabei wird ausgenutzt, dass der Einlern-Betriebsmodus in einem selbstfahrenden Fahrzeug durch eine Zentral-Steuereinheit gezielt bzw. passend in das Fahrgeschehen einbaut werden kann, ohne dass eine Übersteuerung durch einen manuellen Fahrer oder eine andere automatisierte Instanz erfolgt. Daher stört das Aktivieren des Einlern-Betriebsmodus, in dem gezielt zwischen erster und zweiter Phase umgeschaltet wird, nicht den normalen Betrieb des selbstfahrenden Fahrzeuges in einem Fahrt-Betriebsmodus und umgedreht.

Vorzugsweise ist dabei vorgesehen, dass der erste Kraft-Wert in der ersten Phase oder der zweite Kraft-Wert in der zweiten Phase auf Null eingestellt wird, so dass in der ersten Phase oder in der zweiten Phase lediglich eine Störkraft auf das selbstfahrende Fahrzeug einwirkt. Auf diese Weise kann in der jeweiligen Phase, in der eine interne Kraft gezielt auf Null eingestellt wird, d.h. keine Antriebsleistung oder keine Verzögerungsleistung wirkt, unmittelbar aus der dann vorliegenden Fahrzeugreaktion, insbesondere der dann vorliegenden Fahrzeug-Beschleunigung, abgeschätzt werden, welche Störkräfte auf das selbstfahrende Fahrzeug einwirken, da allein diese dann für eine Fahrzeug-Beschleunigung sorgen. Dies ermöglicht eine einfache quantitative Abschätzung der Störkräfte, die dann nachfolgend in der jeweils anderen Phase für die Masseabschätzung herangezogen werden können.

Vorzugsweise ist weiterhin vorgesehen, dass eine automatisierte Ansteuerung des elektronischen Antriebssystems und/oder des elektronischen Bremssystems bei aktiviertem Einlern-Betriebsmodus zur Einstellung eines ersten Kraft-Wertes oder eines zweiten Kraft-Wertes von Null in der jeweiligen Phase derartig erfolgt, dass ein Antriebsstrang des selbstfahrenden Fahrzeuges geöffnet ist, beispielsweise durch ein gezieltes Auskuppeln, und/oder jegliche Bremsen des selbstfahrenden Fahrzeuges gelöst sind. Demnach wird sich die Fahrzeug-Beschleunigung nur noch durch Störkräfte, insbesondere von außen auf das selbstfahrende Fahrzeug wirkende Kräfte, z.B. eine Hangabtriebskraft, ein Luftwiderstand, etc., oder im selbstfahrenden Fahrzeug wirkende Kräfte, z.B. interne Reibungskräfte der Antriebskomponenten oder eine Haftreibungskraft auf der Fahrbahn, verändert. Auf diese einfache Weise kann gezielt ein passiver Fahrzustand geschaffen werden, um in der jeweiligen Phase die Störkräfte abzuschätzen, beispielsweise aus der dann wirkenden Fahrzeug-Beschleunigung.

In der ersten Phase stellt sich dabei aufgrund der Einstellung des ersten Kraft-Wertes und dem Vorliegen einer Störkraft ein erster Beschleunigungs-Wert für die Fahrzeug-Beschleunigung ein und in der zweiten Phase aufgrund der Einstellung des zweiten Kraft-Wertes und dem Vorliegen einer Störkraft ein zweiter Beschleunigungs-Wert für die Fahrzeug-Beschleunigung. Die jeweiligen Kraft- und Beschleunigungs-Werte, außer der Störkraft, können dabei in der jeweiligen Phase über entsprechende Sensoren im Fahrzeug in einfacher Weise ermittelt werden bzw. von den jeweiligen Steuereinheiten des elektronischen Antriebssystems bzw. Bremssystems im selbstfahrenden Fahrzeug bereitgestellt werden, so dass keine zusätzliche Sensorik nötig ist.

Ausgehend davon ist weiterhin vorgesehen, dass zum Ermitteln der Fahrzeugmasse ein die Fahrzeugmasse charakterisierender Masse-Mittelwert aus Masse-Einzelwerten bestimmt wird, wobei jeder Phase, in der der erste Kraft-Wert und/oder der zweite Kraft-Wert ungleich Null ist, mindestens ein Masse-Einzelwert zugeordnet ist, wobei die Masse-Einzelwerte aus dem in der jeweiligen Phase vorliegenden ersten Kraft-Wert bzw. zweiten Kraft-Wert und dem in der jeweiligen Phase vorliegenden ersten bzw. zweiten Beschleunigungs-Wert unter Berücksichtigung eines Störkraft-Wertes folgen, vorzugsweise aus dem zweitem Newtonschen Gesetz.

Daher kann in einfacher Weise über in den jeweiligen Phasen ermittelte Kraft-Werte und Beschleunigungs-Werte eine Fahrzeugmasse beispielsweise durch Mittelwertbildung ermittelt werden, die auch die in den jeweiligen Phasen wirkenden Störkräfte berücksichtigt, was die Masseermittlung genauer macht. Vorzugsweise folgt der Störkraft-Wert dabei bei einer Phase mit einem Kraft-Wert von Null unmittelbar aus der in dieser Phase vorliegenden Fahrzeug-Beschleunigung und bei sich abwechselnden ersten und zweiten Phasen ohne einen Kraft-Wert von Null durch einen Vergleich der in den jeweiligen Phasen vorliegenden Fahrzeug-Beschleunigungen, da die Störkraft in beiden Phasen gleichermaßen einen Einfluss auf die Fahrzeug-Beschleunigung hat.

Vorzugsweise ist weiterhin vorgesehen, dass ein Masse-Einzelwert in Abhängigkeit eines Störkraft-Wertes bestimmt wird, der die Störkraft in einer Phase charakterisiert, die unmittelbar vor der dem Masse-Einzelwert zugeordneten Phase liegt. Daher werden die Masse-Einzelwerte basierend auf einer Störkraft berechnet, die mit hoher Wahrscheinlichkeit auch noch in der jeweils zugeordneten Phase vorliegen. Dadurch wird die Ermittlung der Masse-Einzelwerte insgesamt genauer.

Vorzugsweise ist weiterhin vorgesehen, dass der Einlern-Betriebsmodus so lange aktiviert bleibt, bis unterschiedlichen Phasen zugeordnete Masse-Einzelwerte innerhalb eines Toleranzwertes um den Masse-Mittelwert liegen. Dadurch können Abweichungen, die beispielsweise aufgrund von temporär auftretenden Störkräften, beispielsweise kurzen Windböen oder kurzen Fahrbahnneigungen, auftreten herausgefiltert werden, da diese bei einer Mittelwertbildung über einen größeren Zeitraum weniger ins Gewicht fallen.

Vorzugsweise kann weiterhin vorgesehen sein, dass der Einlern-Betriebsmodus so lange aktiviert bleibt, bis in unterschiedlichen Phasen ermittelte Störkraft-Werte um weniger als einen Grenzwert voneinander abweichen. Daher können auch die ermittelten Störkräfte direkt miteinander verglichen werden, um festzustellen, ob lediglich kurzzeitig wirkende Störkräfte auftreten, und in dem Fall den Einlern-Betriebsmodus zu verlängern.

Vorzugsweise ist dabei vorgesehen, dass der Einlern-Betriebsmodus für mindestens zwei erste Phasen und mindestens zwei zweite Phasen aktiviert bleibt, die sich jeweils abwechseln. Mit dieser Anzahl an ersten und zweiten Phasen ist zumindest eine sichere Ermittlung der Fahrzeugmasse unter Berücksichtigung der Störkräfte gegeben.

Vorzugsweise ist weiterhin vorgesehen, dass das Ermitteln, ob ein Trigger-Ereignis vorliegt, in Abhängigkeit von Betriebs-Informationen des selbstfahrenden Fahrzeuges durchgeführt wird, wobei die Betriebs-Informationen mindestens ein Element beinhalten, das gewählt ist aus der Gruppe bestehend aus:
- eine Anhänger-Statuswechsel-Information, die angibt, ob eine Anhängerkupplung des selbstfahrenden Fahrzeuges zwischen einer geöffneten Stellung und einer geschlossenen Stellung umgeschaltet wurde, um daraus abzuleiten, ob sich die Fahrzeugmasse wahrscheinlich aufgrund eines Ankuppelns oder Abkuppelns eines Anhängers verändert hat; und/oder
- eine Ladeöffnungs-Statuswechsel-Information, die angibt, ob eine Ladeöffnung zu einem Laderaum des selbstfahrenden Fahrzeuges geöffnet oder geschlossen wurde, um daraus abzuleiten, ob sich die Fahrzeugmasse mit hoher Wahrscheinlichkeit aufgrund eines Beladens oder Entladens einer Ladung über die jeweilige Ladeöffnung verändert hat; und/oder
- eine Niveau-Veränderungs-Information, die angibt, ob sich ein Abstand zwischen zumindest einer der Fahrzeugachsen und einem Fahrzeugrahmen des selbstfahrenden Fahrzeuges verändert hat, um daraus abzuleiten, ob sich die Fahrzeugmasse mit hoher Wahrscheinlichkeit aufgrund einer Änderung der Belastung auf den Fahrzeugrahmen verändert hat; und/oder
- eine Plan-Beladungs-Information, die angibt, ob und wann es zu einer planmäßigen Aufnahme oder Abgabe einer Ladung durch das selbstfahrende Fahrzeug kommen sollte, um daraus abzuleiten, ob sich die Fahrzeugmasse mit hoher Wahrscheinlichkeit aufgrund einer beispielsweise vom Flottenbetreiber geplanten Beladung oder Entladung verändert hat; und/oder
- eine Ladetätigkeits-Information, die angibt, ob in einer Umgebung des selbstfahrenden Fahrzeuges Ladetätigkeiten wahrgenommenen werden, wobei dies beispielsweise über eine Sensor-Anordnung erfolgt, die beispielsweise eine Kamera aufweist, über die Ladetätigkeiten von z.B. Personen und/oder Flurförderfahrzeugen in der Umgebung wahrgenommen werden können, um daraus abzuleiten, ob sich die Fahrzeugmasse mit hoher Wahrscheinlichkeit aufgrund einer Beladung oder Entladung verändert hat; und/oder
- eine Ladeverlust-Information, die angibt, ob ein ungewollter Verlust von Ladung vom selbstfahrenden Fahrzeug, beispielsweise während der Fahrt, wahrgenommen wurde, wobei dies beispielsweise über eine Sensor-Anordnung erfolgt, die beispielsweise eine Kamera aufweist, die einen Verlust der Ladung vom selbstfahrenden Fahrzeug wahrnehmen kann, um daraus abzuleiten, ob sich die Fahrzeugmasse mit hoher Wahrscheinlichkeit aufgrund einer verlorenen Ladung verändert hat; und/oder
- eine Remote-Information, die angibt, ob über ein Cloud-System oder eine anderes drahtloses Remote-System eine Aufnahme oder Abgabe von Ladung durch das selbstfahrende Fahrzeug drahtlos kommuniziert wurde, um daraus abzuleiten, ob sich die Fahrzeugmasse mit hoher Wahrscheinlichkeit aufgrund einer Beladung oder Entladung verändert hat; und/oder
- eine Positions-Information, die angibt, ob sich das selbstfahrende Fahrzeug außerhalb des öffentlichen Straßenverkehrs befindet, z.B. auf einem Betriebshof, um daraus abzuleiten, ob sich die Fahrzeugmasse mit hoher Wahrscheinlichkeit aufgrund einer Beladung oder Entladung verändert hat, insbesondere insofern die aktuelle Position des selbstfahrenden Fahrzeuges auf eine Möglichkeit der Beladung oder Entladung hinweist.

Daher stehen im selbstfahrenden Fahrzeug eine Reihe von Betriebs-Informationen zur Verfügung, die allein oder in Kombination miteinander verwendet werden können, um auf ein Trigger-Ereignis zu schließen. Vorzugsweise ist dazu vorgesehen, dass anhand der Betriebs-Informationen bewertet wird, ob eine Änderung der Fahrzeugmasse wahrscheinlich ist, und ein Trigger-Signal ausgegeben wird, wenn anhand der Betriebs-Informationen festgestellt wurde, dass eine Änderung der Fahrzeugmasse wahrscheinlich ist, wobei anhand des Trigger-Signals ermittelt wird, ob ein Trigger-Ereignis vorliegt.

Die Erfindung wird im Folgenden anhand von Figuren näher erläutert. Es zeigen:
- Fig. 1: eine schematische Ansicht eines Fahrzeuges;
- Fig. 2: ein Flussdiagramm des erfindungsgemäßen Verfahrens; und
- Fig. 3: eine zeitliche Übersicht des Einlern-Betriebsmodus.

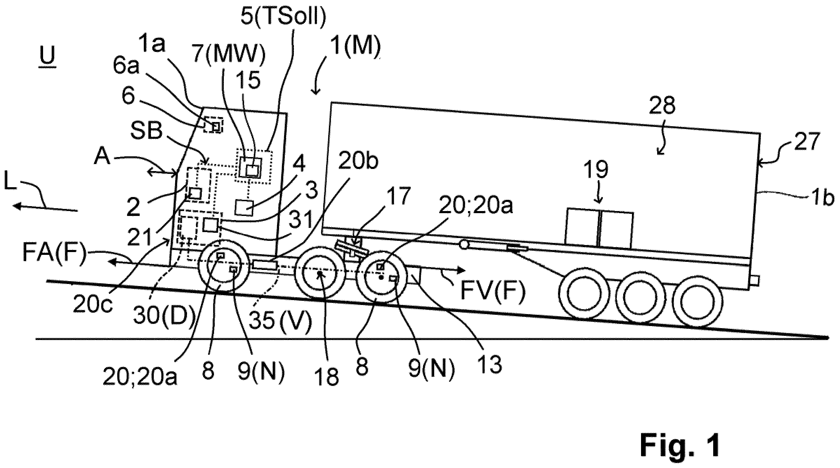

Figur 1 zeigt schematisiert ein autonom betriebenes bzw. selbstfahrendes Fahrzeug 1, das aus einem Zugfahrzeug 1a und einem Auflieger 1b besteht. Dabei ist vorgesehen, dass das selbstfahrende Fahrzeug 1 in einer Automatisierungsstufe 4 oder höher (gemäß der Norm SAE J3016) betrieben wird, d.h. ein Fahrer nicht zwingend anwesend oder aufmerksam sein muss. Das selbstfahrende Fahrzeug 1 kann grundsätzlich auch ein einteiliges Fahrzeug sein oder als mehrteiliges Fahrzeug aus einem Zugfahrzeug 1a mit einem oder mehreren Anhängern (Deichselanhänger, etc.) oder Aufliegern 1b bestehen.

Das selbstfahrende Fahrzeug 1 weist ein elektronisches Bremssystem 2, ein elektronisches Antriebssystem 3 und ein elektronisches Lenksystem 4 auf, über die das selbstfahrende Fahrzeug 1 entsprechend automatisiert abgebremst, angetrieben bzw. gelenkt werden kann. Zur Steuerung der einzelnen elektronischen Systeme 2, 3, 4 ist eine Zentral-Steuereinheit 5 (Virtual Driver) vorgesehen, die in einem Fahrt-Betriebsmodus FB ausgebildet ist, eine Soll-Trajektorie TSoll zu ermitteln und/oder einzulesen und das selbstfahrende Fahrzeug 1 durch Ansteuerung der elektronischen Systeme 2, 3, 4 entlang dieser Soll-Trajektorie TSoll zu führen.

Das selbstfahrende Fahrzeug 1 weist ferner eine beispielsweise im Zugfahrzeug 1a angeordnete Massen-Abschätzungseinheit 7 auf, die ausgebildet ist, eine Fahrzeugmasse M des selbstfahrenden Fahrzeuges 1 abzuschätzen und einen entsprechenden Masse-Schätzwert MW auszugeben. Die Fahrzeugmasse M bezieht sich dabei vorliegend auf das gesamte selbstfahrende Fahrzeug 1 aus jeglichen Fahrzeugteilen (Zugfahrzeug 1a und Auflieger 1b bzw. weitere Anhänger/Auflieger). Die Massen-Abschätzungseinheit 7 kann beispielsweise in der Zentral-Steuereinheit 5 integriert sein, beispielsweise als Software bzw. Algorithmus. Gleichwirkend damit kann die Massen-Abschätzungseinheit 7 auch signalleitend mit der Zentral-Steuereinheit 5 verbunden sein und/oder in einem der elektronischen Systeme 2, 3, 4 integriert sein, so dass der Massen-Schätzwert MW auch von extern auf die Zentral-Steuereinheit 5 übertragen werden kann.

Die Zentral-Steuereinheit 5 kann den Masse-Schätzwert MW insbesondere zur Festlegung der Soll-Trajektorie TSoll und/oder auch beim Abfahren der Soll-Trajektorie TSoll verwenden, um stabilitätskritische Situationen im autonomen Fahrbetrieb vorausschauend und/oder in der aktuellen Fahrsituation zu vermeiden. Um eine möglichst gute Planbarkeit im vollautomatisierten Fahrbetrieb zu gewährleisten und auch die aktuelle Fahrsituation im Hinblick auf die Fahrstabilität exakt bewerten zu können, ist die Fahrzeugmasse M durch die Massen-Abschätzungseinheit 7 möglichst genau zu ermitteln.

Die Massen-Abschätzungseinheit 7 schätzt die Fahrzeugmasse M dabei auf Grundlage des zweiten Newtonschen Gesetzes F = M x A ab, wobei F eine interne Kraft ist, mit der das selbstfahrende Fahrzeug 1 angetrieben oder verzögert wird, um die Fahrzeugmasse M mit einer in Längsrichtung L des selbstfahrenden Fahrzeuges 1 orientierten Fahrzeug-Beschleunigung A (positiv oder negativ) zu beschleunigen. Daher kann entweder eine Antriebskraft FA oder eine Verzögerungskraft FV am selbstfahrenden Fahrzeug 1 wirken, die in obiger Formel die interne Kraft F mit beeinflussen.

Im angetriebenen Fall ergibt sich die Antriebskraft FA beispielsweise aus einem vom Antrieb 30 des elektronischen Antriebssystems 3 erzeugten Motordrehmoment D unter Berücksichtigung von normalerweise in einem Antriebsstrang 35 des selbstfahrenden Fahrzeuges 1 auftretenden Verlusten V, die vorzugsweise bekannt sind. Das Motordrehmoment D oder eine damit zusammenhängende Größe kann beispielsweise von einer Antriebssteuerung 31 (Motorelektronik) des elektronischen Antriebssystems 3, beispielsweise über einen Datenbus des selbstfahrenden Fahrzeuges 1, an die Massen-Abschätzungseinheit 7 in der Zentral-Steuereinheit 5 übermittelt werden. Diese kann in Abhängigkeit davon unter Berücksichtigung der bekannten Verluste V im Antriebsstrang 35 einen (positiven) Kraft-Wert FW ermitteln, der im angetriebenen Fall die Antriebskraft FA charakterisiert.

Im gebremsten Fall ergibt sich die Verzögerungskraft FV bzw. ein (negativer) Kraft-Wert FW beispielsweise aus in einer Bremssteuerung 21 des elektronischen Bremssystems 2 generierten Ansteuerzeiten der einzelnen Bremsen 20 (Betriebsbremse 20a, Dauerbremse 20b, Motorbremse 20c, etc.) und/oder aus Bremssignalen SB, die von der Bremssteuerung 21 des elektronischen Bremssystems 2 an die einzelnen Bremsen 20 ausgegeben werden, um das selbstfahrende Fahrzeug 1 wie angefordert abzubremsen. Daher können auch von der Bremssteuerung 21 die aktuelle Verzögerungskraft FV charakterisierende Größen beispielsweise über den Datenbus an die Massen-Abschätzungseinheit 7 in der Zentral-Steuereinheit 5 übermittelt werden.

Die Fahrzeug-Beschleunigung A kann durch einen Beschleunigungs-Wert AW charakterisiert werden, der sich beispielsweise in Abhängigkeit von berechneten Radbeschleunigungen A8 der einzelnen Räder 8 des selbstfahrenden Fahrzeuges 1 ergibt. Dazu werden von Raddrehzahlsensoren 9 an den jeweiligen Rädern 8 des selbstfahrenden Fahrzeuges 1 die Raddrehzahlen N radindividuell ermittelt und daraus durch mathematisches Ableiten die einzelnen Radbeschleunigungen A8 berechnet. Die Fahrzeug-Beschleunigung A bzw. der Beschleunigungs-Wert AW folgt dann beispielsweise durch Bilden eines Mittelwertes (arithmetisches Mittel) über alle oder einige Räder 8.

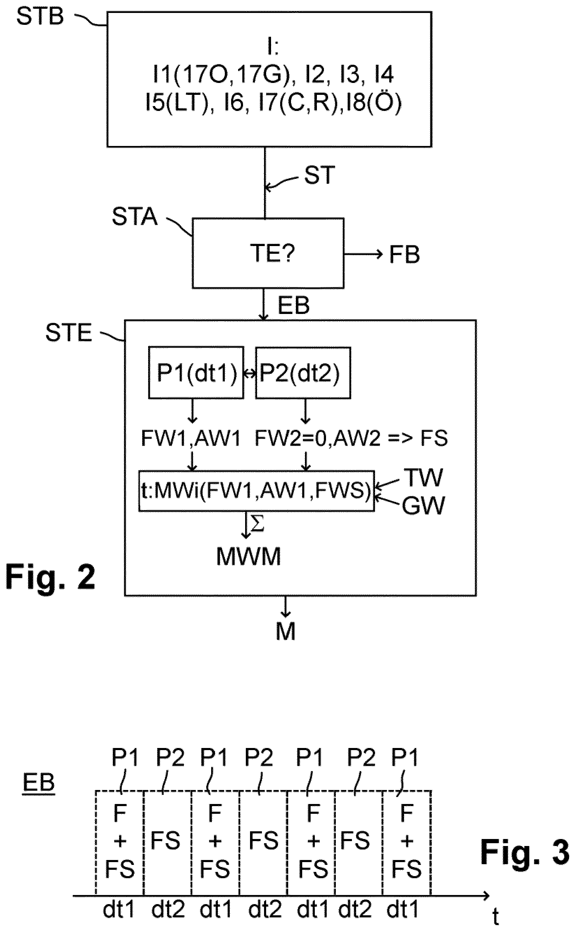

Die Fahrzeugmasse M wird in der Massen-Abschätzungseinheit 7 beispielsweise dadurch abgeschätzt, dass in einem Ermittlungsschritt STE (vgl. Fig. 2) fortlaufend Masse-Einzelwerte MWi, mit i = 1, 2, 3, ... p (p = Anzahl an Einzelwerten) berechnet werden, die aus der jeweils aktuellen Fahrsituation über die Formel M = F / A folgen. Anschließend wird aus den zu unterschiedlichen Zeitpunkten t ermittelten Masse-Einzelwerten MWi ein Masse-Mittelwert MWM (arithmetisches Mittel) gebildet, wobei der Masse-Mittelwert MWM den auszugebenden Masse-Schätzwert MW angibt. Durch die Mittelung nähert sich der Masse-Schätzwert MW mit steigender Anzahl p an Masse-Einzelwerten MWi an die tatsächliche Fahrzeugmasse M des selbstfahrenden Fahrzeuges 1 an.

Um diesen Ermittlungsprozess möglichst exakt durchzuführen, werden die Masse-Einzelwerte MWi in einem Einlern-Betriebsmodus EB ermittelt, der von der Zentral-Steuereinheit 5 in einem Aktivierungsschritt STA gezielt eingestellt bzw. aktiviert werden kann, wenn ein später noch näher erläutertes Trigger-Ereignis TE vorliegt. Liegt ein solches nicht vor, wird das selbstfahrende Fahrzeug 1 weiterhin im Fahrt-Betriebsmodus FB betrieben. Im Einlern-Betriebsmodus EB wechseln sich erste Phasen P1 und zweite Phasen P2 gezielt ab, wobei die Zentral-Steuereinheit 5 das elektronische Antriebssystem 3 und/oder das elektronische Bremssystem 2 dazu gemäß Fig. 3 in ersten Zeiträumen dt1 zum Einstellen der ersten Phasen P1 und in zweiten Zeiträumen dt2 zum Einstellen der zweiten Phasen P2 gezielt ansteuert oder eine Ansteuerung gezielt aussetzt.

In der ersten Phase P1 wird das selbstfahrende Fahrzeug 1 dabei mit einer definierten internen Kraft F, d.h. Antriebskraft FA oder Verzögerungskraft FV, über den Antrieb 30 aktiv angetrieben bzw. über die jeweiligen Bremsen 20 (Betriebsbremsen 20a, Dauerbremsen 20b, Motorbremsen 20c, etc.) aktiv verzögert. In der ersten Phase P1 liegt also ein bestimmter, die interne Kraft F charakterisierender erster Kraft-Wert FW1 vor. In der zweiten Phase P2 wird das selbstfahrende Fahrzeug 1 ebenfalls mit einer definierten internen Kraft F betrieben, wobei in der zweiten Phase P2 ein bestimmter, die interne Kraft F charakterisierender zweiter Kraft-Wert FW2 vorliegt, der sich explizit von dem ersten Kraft-Wert FW1 unterscheidet. Das selbstfahrende Fahrzeug 1 wird also in beiden Phasen P1, P2 unterschiedlich betrieben, wobei sich in der ersten Phase P1 ein die Fahrzeug-Beschleunigung A in dieser ersten Phase P1 charakterisierender erster Beschleunigungs-Wert AW1 einstellt und in der zweiten Phase P2 ein die Fahrzeug-Beschleunigung A in dieser zweiten Phase P2 charakterisierender zweiter Beschleunigungs-Wert AW2.

In einer bevorzugten Ausführungsform ist der zweite Kraft-Wert FW2 in der zweiten Phase P2 Null, d.h. das selbstfahrenden Fahrzeug 1 wird in der zweiten Phase P2 nicht über den Antrieb 30 aktiv angetrieben oder nicht über die jeweiligen Bremsen 20 aktiv abgebremst. Die Antriebssteuerung 31 bzw. das elektronische Antriebssystem 2 und/oder die Bremssteuerung 21 bzw. das elektronische Bremssystem 3 werden dazu in der zweiten Phase P2 derartig von der Zentral-Steuereinheit 5 angesteuert, dass beispielsweise der Antriebsstrang 35 durch Auskuppeln geöffnet ist bzw. die jeweiligen Bremsen 20 gelöst sind.

In der zweiten Phase P2 wird also gemäß der bevorzugten Ausführungsform ein definierter Fahrzustand geschaffen, in dem sich die Fahrzeug-Beschleunigung A des selbstfahrenden Fahrzeuges 1 lediglich in Abhängigkeit von unbekannten Störkräften FS ändert, insofern solche vorliegen. Liegt in der zweiten Phase P2 beispielsweise eine Fahrzeug-Beschleunigung A bzw. ein zweiter Beschleunigungs-Wert AW2 von ungleich Null vor, so kann daraus eine die (positive oder negative) Störkraft FS oder eine diese charakterisierende Störgröße abgeleitet werden, die für die Bewegungsänderung (antreiben oder verzögern) des selbstfahrenden Fahrzeuges 1 in der zweiten Phase P2 zuständig ist.

Eine (positive oder negative) Störkraft FS kann beispielsweise aufgrund einer Neigung (Gefälle, Steigung), entlang der sich das selbstfahrende Fahrzeug 1 bewegt, oder der Einwirkung von Wind (von vorn oder hinten) oder anderen von außen wirkenden Kräften auf das selbstfahrende Fahrzeug 1 verursacht werden. Ferner können Störkräfte FS aber auch Reibungskräfte sein, die beispielsweise an den beweglichen Antriebskomponenten im selbstfahrenden Fahrzeug 1 wirken und/oder die aufgrund eines bestimmten Reifenzustandes auf der Fahrbahn wirken (Haftreibungskräfte). Diese Störkräfte FS können durch Sensoren im selbstfahrenden Fahrzeug 1 entweder überhaupt nicht oder nicht immer exakt ermittelt werden. Die zweite Phase P2 mit einem definierten zweiten Kraft-Wert FW2 von Null ermöglicht aber unmittelbar eine Abschätzung dieser Störkräfte FS, die in einem entsprechenden Störkraft-Wert FWS von der Massen-Abschätzungseinheit 7 verarbeitet werden können.

In der ersten Phase P1 wird ein Fahrzustand geschaffen, in dem sich die Fahrzeug-Beschleunigung A des selbstfahrenden Fahrzeuges 1 infolge der bekannten bzw. definierten internen Kräfte F bzw. der definierten ersten Kraft-Werte FW1 (positiv oder negativ) durch den Antrieb 30 oder die Bremsen 20 aber auch in Abhängigkeit der unbekannten Störkräfte FS, falls vorhanden, ändert. Unter der Annahme, dass sich die Störkräfte FS in den unmittelbar aufeinanderfolgenden Phasen P1, P2 nicht deutlich ändern, können die in der zweiten Phase P2 unmittelbar ermittelten bzw. abgeschätzten Störkräfte FS bzw. der Störkraft-Wert FWS in dem Ermittlungsschritt STE, in dem die Masse-Einzelwerte MWi anhand der in der ersten Phase P1 vorliegenden ersten Kraft-Werte FW1 und der ersten Beschleunigungs-Werte AW1 für unterschiedliche Zeitpunkte t abgeschätzt werden, gezielt mitberücksichtigt werden. Somit ergibt sich im Ermittlungsschritt STE eine Ermittlung der Masse-Einzelwerte beispielsweise über MWi = (FW1 + FWS) / AW1, d.h. aus der durch die bekannten und unbekannten Kräfte F, FS bewirkten Fahrzeug-Beschleunigung A des selbstfahrenden Fahrzeuges 1.

Ist der zweite Kraft-Wert FW2 in der zweiten Phase P2 nicht Null, so kann die Störkraft FS zwar nicht unmittelbar aus dem zweiten Beschleunigungs-Wert AW2 abgeschätzt werden aber zumindest aus dem Unterschied zwischen dem ersten Beschleunigungs-Wert AW1 in der ersten Phase P1 und dem zweiten Beschleunigungs-Wert AW2 in der zweiten Phase P2 unter Berücksichtigung der jeweils eingestellten Kraft-Werte FW1, FW2, wenn auch hier wieder angenommen wird, dass die Störkräfte FS in beiden Phasen P1, P2 in etwa identisch sind. Daher folgt ein Ermitteln der Störkräfte FS bzw. eines Störkraft-Wertes FWS nachdem eine erste und eine zweite Phase P1, P2 zumindest einmalig durchlaufen wurden.

Durch ein mehrfaches gezieltes Umschalten zwischen der ersten Phase P1 und der zweiten Phase P2 durch die Zentral-Steuereinheit 5 können sich schnell ändernde Störkräfte FS, beispielsweise temporäre Windböen, auch erkannt und berücksichtigt werden. Weichen die Masse-Einzelwerte MWi, die über mehrere aufeinanderfolgende erste Phasen P1 oder zweite Phasen P2, in denen die zweiten Kraft-Werte FW2 ungleich Null sind, anhand der Störkräfte FS aus den jeweils vorangegangenen Phasen P1, P2 bestimmt wurden, beispielsweise um einen bestimmten Toleranzwert TW voneinander ab, so kann der Einlern-Betriebsmodus EB entsprechend verlängert werden, bis die Masse-Einzelwerte MWi innerhalb einer bestimmten Toleranz liegen bzw. die Massestreuung minimiert ist. Gemäß einer gleichwirkenden Alternative können auch die abgeschätzten Störkräfte FS aus aufeinanderfolgenden Phasen P1, P2 miteinander verglichen werden und bei Abweichungen oberhalb eines Grenzwertes GW eine Verlängerung des Einlern-Betriebsmodus EB vorgesehen sein. Dadurch werden kurzzeitig auftretende Störkräfte FS, die nur in der zweiten Phase P2 und nicht vollständig in der ersten Phase P1 wirken (oder umgedreht), herausgefiltert. Die Masseermittlung wird dadurch insgesamt genauer.

Das Aktivieren des Einlern-Betriebsmodus EB durch die Zentral-Steuereinheit 5 kann im Gegensatz zu einem manuellen Fahrbetrieb, z.B. in der Autonomiestufe 2, derartig erfolgen, dass dadurch keine ungewollte bzw. störende Rückwirkung auf den normalen Fahrbetrieb entsteht, da sie vom virtuellen Fahrer bzw. der Zentral-Steuereinheit 5 entsprechend eingeplant werden kann und währenddessen im Normalfall keine Übersteuerung stattfindet, was den Einlernprozess insgesamt vereinfacht.

Wie bereits angeführt, wird der Einlern-Betriebsmodus EB in dem Aktivierungsschritt STA lediglich bei Vorliegen eines Trigger-Ereignisses TE aktiviert. Dieses liegt beispielsweise dann vor, wenn durch eine Bewertungseinheit 15, die z.B. in der Masse-Abschätzungseinheit 7 integriert sein kann, in einem Bewertungsschritt STB eine Änderung der Fahrzeugmasse M als wahrscheinlich eingestuft wurde. Ist dies der Fall, kann von der Bewertungseinheit 15 ein Trigger-Signal ST ausgegeben werden, woraufhin die Zentral-Steuereinheit 5 im Aktivierungsschritt STA den Einlern-Betriebsmodus EB aktiviert und durch elektrische Ansteuerung der elektronischen Systeme 2, 3, 4 in den jeweiligen Zeiträumen dt1, dt2 abwechseln die jeweiligen Phasen P1, P2 wie oben beschrieben umsetzt.

Die Bewertungseinheit 15 greift im Bewertungsschritt STB zum Ermitteln, ob eine Änderung der Fahrzeugmasse M wahrscheinlich ist bzw. ob ein Trigger-Ereignis TE vorliegt, beispielsweise auf Betriebs-Informationen I zurück, die für den Betrieb des selbstfahrenden Fahrzeuges 1 ohnehin erfasst und genutzt werden und daher uneingeschränkt zur Verfügung stehen. Diese Betriebs-Informationen I können dabei beispielsweise sein:
- eine Anhänger-Statuswechsel-Information I1, die angibt, ob eine Anhängerkupplung 17 (Sattelkupplung, Deichselkupplung, etc.) des selbstfahrenden Fahrzeuges 1 zwischen einer geöffneten Stellung 170 und einer geschlossenen Stellung 17G (oder umgedreht) umgeschaltet wurde, woraus abgeleitet werden kann, dass sich die Fahrzeugmasse M mit hoher Wahrscheinlichkeit aufgrund eines Ankuppelns oder Abkuppelns des Anhängers 1b verändert hat; und/oder
- eine Ladeöffnungs-Statuswechsel-Information I2, die angibt, ob eine Ladeöffnung 27, beispielsweise eine Ladetür, ein Rolltor, etc. zum Laderaum 28 geöffnet und/oder geschlossen wurden, woraus abgeleitet werden kann, dass sich die Fahrzeugmasse M mit hoher Wahrscheinlichkeit aufgrund eines Beladens oder Entladens einer Ladung 19 über die jeweilige Ladeöffnung 27 verändert hat; und/oder
- eine Niveau-Veränderungs-Information I3, die angibt, ob sich ein Abstand zwischen zumindest einer der Fahrzeugachsen 18 und einem Fahrzeugrahmen 13 des selbstfahrenden Fahrzeuges 1 verändert hat, woraus ableitet werden kann, dass sich die Fahrzeugmasse M mit hoher Wahrscheinlichkeit aufgrund einer Änderung der Belastung auf den Fahrzeugrahmen 13 verändert hat; und/oder
- eine Plan-Beladungs-Information I4, die angibt, ob und wann es zu einer planmäßigen Aufnahme oder Abgabe einer Ladung 19 durch das selbstfahrende Fahrzeug 1 kommen sollte, woraus ableitet werden kann, dass sich die Fahrzeugmasse M mit hoher Wahrscheinlichkeit aufgrund einer geplanten Beladung oder Entladung verändert hat; und/oder
- eine Ladetätigkeits-Information I5, die angibt, ob in der Umgebung U des selbstfahrenden Fahrzeuges 1 Ladetätigkeiten LT wahrgenommenen werden, wobei dies beispielsweise anhand von Sensoren einer Sensor-Anordnung 6 erfolgen kann, die beispielsweise eine Kamera 6a als Sensor aufweist, die Ladetätigkeiten LT von z.B. Personen und/oder Flurförderfahrzeugen wahrnehmen kann, woraus abgeleitet werden kann, dass sich die Fahrzeugmasse M mit hoher Wahrscheinlichkeit aufgrund einer Beladung oder Entladung verändert hat; und/oder
- eine Ladeverlust-Information I6, die angibt, ob ein ungewollter Verlust von Ladung 19 beispielsweise während der Fahrt wahrgenommen wurde, wobei dies beispielsweise anhand von Sensoren einer Sensor-Anordnung 6 im selbstfahrenden Fahrzeug 1 erfolgen kann, die beispielsweise eine Kamera 6a als Sensor aufweist, die einen Verlust der Ladung 19 wahrnehmen kann, woraus abgeleitet werden kann, dass sich die Fahrzeugmasse M mit hoher Wahrscheinlichkeit aufgrund einer verlorenen Ladung 19 verändert hat; und/oder
- eine Remote-Information I7, die angibt, ob über ein Cloud-System C oder eine anderes drahtloses Remote-System R eine Aufnahme oder Abgabe von Ladung 19 drahtlos kommuniziert wurde, woraus abgeleitet werden kann, dass sich die Fahrzeugmasse M mit hoher Wahrscheinlichkeit aufgrund einer Beladung oder Entladung verändert hat; und/oder
- eine Positions-Information I8, die angibt, ob sich das selbstfahrende Fahrzeug 1 außerhalb des öffentlichen Straßenverkehrs Ö befindet, z.B. auf einem Betriebshof, woraus abgeleitet werden kann, dass sich die Fahrzeugmasse M mit hoher Wahrscheinlichkeit aufgrund einer Beladung oder Entladung verändert hat, insbesondere insofern die aktuelle Position auf eine Möglichkeit der Beladung oder Entladung hinweist.

In Abhängigkeit der jeweiligen Betriebs-Information(en) I, die der Bewertungseinheit 15 zur Verfügung steht/stehen und die beispielsweise über entsprechende Signale im selbstfahrenden Fahrzeug 1 bereitgestellt werden, wird also im Bewertungsschritt STB die Wahrscheinlichkeit für eine Änderung der Fahrzeugmasse M bewertet und daraufhin ein Trigger-Signal ST ausgegeben, wenn die Bewertung auf ein Masseänderungsereignis bzw. auf eine signifikante bzw. relevante Änderung der Fahrzeugmasse M hinweist. Demnach wird die Fahrzeugmasse M nicht fortlaufend in der beschriebenen Art und Weise ermittelt. Eine fortlaufende Validierung der exakten Fahrzeugmasse M während der Fahrt ist also nicht vorgesehen, so dass die Masseermittlung insgesamt vereinfacht wird.

Es kann jedoch eine grobe Plausibilisierung der Fahrzeugmasse M in regelmäßigen Abständen auch bei aktiviertem Fahrt-Betriebsmodus FB erfolgen, indem beispielsweise in Lastpausen, z.B. bei einem Gangwechsel, eine Störkraft FS ermittelt und anhand dessen in Lastphasen Masse-Einzelwerte MWi über das zweite Newtonsche Gesetz zumindest abgeschätzt werden. Ein aktiver Eingriff in das Fahrgeschehen wie in dem Einlern-Betriebsmodus FE findet für diese Plausibilisierung aber nicht statt.

### Bezugszeichenliste (Teil der Beschreibung)

- 1: Fahrzeug
- 1a: Zugfahrzeug
- 1b: Auflieger
- 2: elektronisches Bremssystem
- 3: elektronisches Antriebssystem
- 4: elektronisches Lenksystem
- 5: Zentral-Steuereinheit
- 6: Sensor-Anordnung
- 6a: Kamera
- 7: Massen-Abschätzungseinheit
- 8: Rad des selbstfahrenden Fahrzeuges 1
- 9: Raddrehzahlsensor
- 15: Bewertungseinheit
- 17: Anhängerkupplung
- 170: geöffnete Stellung der Anhängerkupplung 17
- 17G: geschlossene Stellung der Anhängerkupplung 17
- 18: Fahrzeugachse
- 19: Ladung
- 20: Bremse
- 20a: Betriebsbremse
- 20b: Dauerbremse
- 20c: Motorbremse
- 21: Bremssteuerung
- 27: Ladeöffnung
- 28: Laderaum
- 30: Antrieb
- 31: Antriebssteuerung
- 35: Antriebsstrang
- A: Fahrzeug-Beschleunigung
- A8: Radbeschleunigung
- AW: Beschleunigungs-Wert
- AW1: erster Beschleunigungs-Wert
- AW2: zweiter Beschleunigungs-Wert
- C: Cloud-System
- dt1: erster Zeitraum
- dt2: zweiter Zeitraum
- D: Drehmoment
- EB: Einlern-Betriebsmodus
- F: interne Kraft
- FA: Antriebskraft
- FB: Fahrt-Betriebsmodus
- FS: Störkraft
- FV: Verzögerungskraft
- FW: Kraft-Wert
- FW1: erster Kraft-Wert
- FW2: zweiter Kraft-Wert
- FWS: Störkraft-Wert
- GW: Grenzwert
- I: Betriebs-Information
- I1: Anhänger-Statuswechsel-Information
- I2: Ladeöffnungs-Statuswechsel-Information
- I3: Niveau-Veränderungs-Information
- I4: Plan-Beladungs-Information
- I5: Ladetätigkeits-Information
- I6: Ladeverlust-Information
- I7: Remote-Information
- I8: Positions-Information
- L: Längsrichtung
- LT: Ladetätigkeit
- M: Fahrzeugmasse
- MW: Masse-Schätzwert
- MWi: Masse-Einzelwert
- MWM: Masse-Mittelwert
- N: Raddrehzahl
- Ö: öffentlicher Straßenverkehr
- p: Index
- P1: erste Phase
- P2: zweite Phase
- R: Remote-System
- SB: Bremssignal
- ST: Trigger-Signal
- t: Zeitpunkt
- TSoll: Soll-Trajektorie
- TE: Trigger-Ereignis
- TW: Toleranzwert
- V: Verluste im Antriebsstrang 35

- STB, STA, STE: Schritte des Verfahrens

## Patentansprüche

1. Verfahren zum Ermitteln einer Fahrzeugmasse (M) eines selbstfahrenden Fahrzeuges (1), wobei durch eine automatisierte Ansteuerung eines einen Antrieb (30) aufweisenden elektronischen Antriebssystems (3) und/oder eines Bremsen (20) aufweisenden elektronischen Bremssystem (2) eine interne Kraft (F) auf das selbstfahrende Fahrzeug (1) ausgeübt werden kann, mit mindestens den folgenden Schritten:
- Feststellen, ob ein Trigger-Ereignis (TE) vorliegt, wobei das Trigger-Ereignis (TE) angibt, dass eine Änderung der Fahrzeugmasse (M) des selbstfahrenden Fahrzeuges (1) wahrscheinlich ist, und
- Aktivieren eines Einlern-Betriebsmodus (EB) bei Vorliegen eines Trigger-Ereignisses (TE) (STA), wobei das selbstfahrende Fahrzeug (1) in dem Einlern-Betriebsmodus (EB) abwechselnd in einer ersten Phase (P1) und in einer zweiten Phase (P2) betrieben wird, wobei durch eine automatisierte Ansteuerung des elektronischen Antriebssystems (3) und/oder des elektronischen Bremssystems (2)
-- in der ersten Phase (P1) eine interne Kraft (F) mit einem ersten Kraft-Wert (FW1), und
-- in der zweiten Phase (P2) eine interne Kraft (F) mit einem zweiten Kraft-Wert (FW2)
auf das selbstfahrende Fahrzeug (1) ausgeübt wird, wobei sich der erste Kraft-Wert (FW1) von dem zweiten Kraft-Wert (FW2) unterscheidet;
- Ermitteln einer in den Phasen (P1, P2) wirkenden Störkraft (FS); und
- Ermitteln der Fahrzeugmasse (M) (STE) in Abhängigkeit einer Fahrzeug-Beschleunigung (A) und der internen Kraft (F), die jeweils in der jeweiligen Phase (P1, P2) vorliegen, sowie in Abhängigkeit der ermittelten Störkraft (FS).

2. Verfahren nach Anspruch 1, **dadurch gekennzeichnet, dass** der erste Kraft-Wert (FW1) in der ersten Phase (P1) oder der zweite Kraft-Wert (FW2) in der zweiten Phase (P2) auf Null eingestellt wird, so dass in der ersten Phase (P1) oder in der zweiten Phase (P2) lediglich eine Störkraft (FS) auf das selbstfahrende Fahrzeug (1) einwirkt.

3. Verfahren nach Anspruch 2, **dadurch gekennzeichnet, dass** eine automatisierte Ansteuerung des elektronischen Antriebssystems (3) und/oder des elektronischen Bremssystems (2) bei aktiviertem Einlern-Betriebsmodus (EB) zur Einstellung eines ersten Kraft-Wertes (FW1) oder eines zweiten Kraft-Wertes (FW2) von Null in der jeweiligen Phase (P1, P2) derartig erfolgt, dass ein Antriebsstrang (35) des selbstfahrenden Fahrzeuges (1) geöffnet ist und/oder jegliche Bremsen (20) des selbstfahrenden Fahrzeuges (1) gelöst sind.

4. Verfahren nach einem der vorhergehenden Ansprüche, **dadurch gekennzeichnet, dass** das elektronische Antriebssystem (3) und/oder das elektronische Bremssystem (2) bei aktiviertem Einlern-Betriebsmodus (EB) in der ersten Phase (P1) für einen festgelegten ersten Zeitraum (dt1) und in der zweiten Phase (P2) für einen festgelegten zweiten Zeitraum (dt2) durch eine Zentral-Steuereinheit (5) gezielt angesteuert wird oder werden, um in der ersten Phase (P1) eine interne Kraft (F) mit dem ersten Kraft-Wert (FW1), z.B. ungleich Null, und in der zweiten Phase (P2) eine interne Kraft (F) mit dem zweiten Kraft-Wert (FW1), z.B. Null, einzustellen.

5. Verfahren nach einem der vorhergehenden Ansprüche, **dadurch gekennzeichnet, dass** das elektronische Antriebssystem (3) und/oder das elektronische Bremssystem (3) bei aktiviertem Einlern-Betriebsmodus (EB) zum Einstellen eines ersten Kraft-Wertes (FW1) und/oder eines zweiten Kraft-Wertes (FW2) von ungleich Null in der jeweiligen Phase (P1, P2) derartig angesteuert wird, dass als interne Kraft (F) eine Antriebskraft (FA) oder eine Verzögerungskraft (FV) auf das selbstfahrende Fahrzeug (1) wirkt.

6. Verfahren nach einem der vorhergehenden Ansprüche, **dadurch gekennzeichnet, dass** sich in der ersten Phase (P1) aufgrund der Einstellung des ersten Kraft-Wertes (FW1) und dem Vorliegen einer Störkraft (FS) ein erster Beschleunigungs-Wert (AW1) für die Fahrzeug-Beschleunigung (A) einstellt und in der zweiten Phase (P2) aufgrund der Einstellung des zweiten Kraft-Wertes (FW2) und dem Vorliegen einer Störkraft (FS) ein zweiter Beschleunigungs-Wert (AW2) für die Fahrzeug-Beschleunigung (A).

7. Verfahren nach Anspruch 6, **dadurch gekennzeichnet, dass** zum Ermitteln der Fahrzeugmasse (M) ein die Fahrzeugmasse (M) charakterisierender Masse-Mittelwert (MWM) aus Masse-Einzelwerten (MWi) bestimmt wird, wobei jeder Phase (P1, P2), in der der erste Kraft-Wert (FW1) und/oder der zweite Kraft-Wert (FW2) ungleich Null ist, mindestens ein Masse-Einzelwert (MWi) zugeordnet ist,
wobei die Masse-Einzelwerte (MWi) aus dem in der jeweiligen Phase (P1, P2) vorliegenden ersten Kraft-Wert (FW1) oder zweiten Kraft-Wert (FW2) und dem in der jeweiligen Phase (P1, P2) vorliegenden ersten Beschleunigungs-Wert (AW1) oder zweiten Beschleunigungs-Wert (AW2) unter Berücksichtigung eines Störkraft-Wertes (FSW) folgen, wobei der Störkraft-Wert (FSW) die Störkraft (FS) charakterisiert.

8. Verfahren nach Anspruch 7, **dadurch gekennzeichnet, dass** der Störkraft-Wert (FSW)
- aus dem ersten Beschleunigungs-Wert (AW1) folgt, wenn der erste Kraft-Wert (FW1) in der ersten Phase (P1) Null ist, oder
- aus dem zweiten Beschleunigungs-Wert (AW2) folgt, wenn der zweite Kraft-Wert (FW2) in der zweiten Phase (P1) Null ist, oder
aus dem ersten Beschleunigungs-Wert (AW1) und dem zweiten Beschleunigungs-Wert (AW2) folgt, wenn der erste und der zweite Kraft-Wert (FW1, FW2) ungleich Null sind.

9. Verfahren nach Anspruch 7 oder 8, **dadurch gekennzeichnet, dass** ein Masse-Einzelwert (MWi) in Abhängigkeit eines Störkraft-Wertes (FSW) bestimmt wird, der die Störkraft (FS) in einer Phase (P2, P1) charakterisiert, die unmittelbar vor der dem Masse-Einzelwert (MWi) zugeordneten Phase (P1, P2) liegt.

10. Verfahren nach einem der Ansprüche 7 bis 9, **dadurch gekennzeichnet, dass** der Einlern-Betriebsmodus (EB) so lange aktiviert bleibt, bis unterschiedlichen Phasen (P1, P2) zugeordnete Masse-Einzelwerte (MWi) innerhalb eines Toleranzwertes (TW) um den Masse-Mittelwert (MWM) liegen.

11. Verfahren nach einem der Ansprüche 7 bis 10, **dadurch gekennzeichnet, dass** der Einlern-Betriebsmodus (EB) so lange aktiviert bleibt, bis in unterschiedlichen Phasen (P1, P2) ermittelte Störkraft-Werte (FSW) um weniger als einen Grenzwert (GW) voneinander abweichen.

12. Verfahren nach einem der vorhergehenden Ansprüche, **dadurch gekennzeichnet, dass** der Einlern-Betriebsmodus (EB) für mindestens zwei erste Phasen (P1) und mindestens zwei zweite Phasen (P2) aktiviert bleibt, die sich jeweils abwechseln.

13. Verfahren nach einem der vorhergehenden Ansprüche, **dadurch gekennzeichnet, dass** das Ermitteln, ob ein Trigger-Ereignis (TE) vorliegt, in Abhängigkeit von Betriebs-Informationen (I) des selbstfahrenden Fahrzeuges (1) durchgeführt wird, wobei die Betriebs-Informationen (I) mindestens ein Element beinhalten, das gewählt ist aus der Gruppe bestehend aus:
- eine Anhänger-Statuswechsel-Information (11), die angibt, ob eine Anhängerkupplung (17) des selbstfahrenden Fahrzeuges (1) zwischen einer geöffneten Stellung (170) und einer geschlossenen Stellung (17G) umgeschaltet wurde; und/oder
- eine Ladeöffnungs-Statuswechsel-Information (I2), die angibt, ob eine Ladeöffnung (27) zu einem Laderaum (28) des selbstfahrenden Fahrzeuges (1) geöffnet oder geschlossen wurde; und/oder
- eine Niveau-Veränderungs-Information (I3), die angibt, ob sich ein Abstand zwischen zumindest einer der Fahrzeugachsen (18) und einem Fahrzeugrahmen (13) des selbstfahrenden Fahrzeuges (1) verändert hat; und/oder
- eine Plan-Beladungs-Information (I4), die angibt, ob und wann es zu einer planmäßigen Aufnahme oder Abgabe einer Ladung (19) durch das selbstfahrende Fahrzeug (1) kommen sollte; und/oder
- eine Ladetätigkeits-Information (I5), die angibt, ob in einer Umgebung (U) des selbstfahrenden Fahrzeuges (1) Ladetätigkeiten (LT) wahrgenommenen werden, wobei dies beispielsweise über eine Sensor-Anordnung (6) erfolgt, die beispielsweise eine Kamera (6a) aufweist, über die Ladetätigkeiten (LT) in der Umgebung (U) wahrgenommen werden können; und/oder
- eine Ladeverlust-Information (I6), die angibt, ob ein ungewollter Verlust von Ladung (19) vom selbstfahrenden Fahrzeug (1), beispielsweise während der Fahrt, wahrgenommen wurde, wobei dies beispielsweise über eine Sensor-Anordnung (6) erfolgt, die beispielsweise eine Kamera (6a) aufweist, die einen Verlust der Ladung (19) vom selbstfahrenden Fahrzeug (1) wahrnehmen kann; und/oder
- eine Remote-Information (I7), die angibt, ob über ein Cloud-System (C) oder eine anderes drahtloses Remote-System (R) eine Aufnahme oder Abgabe von Ladung (19) durch das selbstfahrende Fahrzeug (1) drahtlos kommuniziert wurde; und/oder
- eine Positions-Information (I8), die angibt, ob sich das selbstfahrende Fahrzeug (1) außerhalb des öffentlichen Straßenverkehrs (Ö) befindet (, z.B. auf einem Betriebshof).

14. Verfahren nach Anspruch 13, **dadurch gekennzeichnet, dass** anhand der Betriebs-Informationen (IB) bewertet wird (STB), ob eine Änderung der Fahrzeugmasse (M) wahrscheinlich ist, und ein Trigger-Signal (ST) ausgegeben wird, wenn festgestellt wurde, dass eine Änderung der Fahrzeugmasse (M) wahrscheinlich ist, wobei anhand des Trigger-Signals (ST) ermittelt wird, ob ein Trigger-Ereignis vorliegt.

15. Zentral-Steuereinheit (5) zur Durchführung eines Verfahrens nach einem der vorhergehenden Ansprüche.

16. Selbstfahrendes Fahrzeug (1) mit einer Zentral-Steuereinheit (5) nach Anspruch 15 und einem elektronischen Bremssystem (2) und einem elektronischen Antriebssystem (3),
wobei die Zentral-Steuereinheit (5) ausgebildet ist, das elektronische Bremssystem (2) und das elektronische Antriebssystem (3) bei Vorliegen eines Trigger-Ereignisses (TE) in einem aktivierten Einlern-Betriebsmodus (EB) derartig anzusteuern, dass das selbstfahrende Fahrzeug (1) abwechselnd in einer ersten Phase (P1) und in einer zweiten Phase (P2) betrieben wird, wobei durch eine automatisierte Ansteuerung des elektronischen Antriebssystems (3) und/oder des elektronischen Bremssystems (2) durch die Zentral-Steuereinheit (5)
-- in der ersten Phase (P1) eine interne Kraft (F) mit einem ersten Kraft-Wert (FW1) auf das selbstfahrende Fahrzeug (1) eingestellt werden kann,und
-- in der zweiten Phase (P2) eine interne Kraft (F) mit einem zweiten Kraft-Wert (FW2) auf das selbstfahrende Fahrzeug (1) eingestellt werden kann, wobei sich der erste Kraft-Wert (FW1) von dem zweiten Kraft-Wert (FW2) unterscheidet; und
die Zentral-Steuereinheit (5) ausgebildet ist, eine in der jeweiligen Phase (P1, P2) wirkende Störkraft (FS) zu ermitteln und eine Fahrzeugmasse (M) in Abhängigkeit der Fahrzeug-Beschleunigung (A) und der internen Kraft (F), die jeweils in der jeweiligen Phase (P1, P2) vorliegen, sowie der Störkraft (FS) zu ermitteln.

## Claims

1. Method for determining a vehicle mass (M) of a self-driving vehicle (1), wherein an internal force (F) can be exerted on the self-driving vehicle (1) by automated control of an electronic drive system (3) which has a drive (30) and/or of an electronic braking system (2) which has brakes (20), comprising at least the following steps:
- identifying whether a trigger event (TE) is present, wherein the trigger event (TE) indicates that a change in the vehicle mass (M) of the self-driving vehicle (1) is likely, and
- activating a learning operating mode (EB) when a trigger event (TE) is present (STA), wherein the self-driving vehicle (1) is operated in the learning operating mode (EB) alternately in a first phase (P1) and in a second phase (P2), wherein by automated control of the electronic drive system (3) and/or of the electronic braking system (2)
-- in the first phase (P1) an internal force (F) which has a first force value (FW1), and
-- in the second phase (P2) an internal force (F) which has a second force value (FW2)
is exerted on the self-driving vehicle (1), wherein the first force value (FW1) differs from the second force value (FW2);
- determining a disturbing force (FS) acting in the phases (P1, P2); and
- determining the vehicle mass (M) (STE) on the basis of a vehicle acceleration (A) and the internal force (F), which are each present in the relevant phase (P1, P2), as well as on the basis of the determined disturbing force (FS).

2. Method according to claim 1, **characterized in that** the first force value (FW1) in the first phase (P1) or the second force value (FW2) in the second phase (P2) is set to zero, so that in the first phase (P1) or in the second phase (P2) only a disturbing force (FS) acts on the self-driving vehicle (1).

3. Method according to claim 2, **characterized in that** automated control of the electronic drive system (3) and/or of the electronic braking system (2) takes place, when the learning operating mode (EB) is activated for setting a first force value (FW1) or a second force value (FW2) of zero in the relevant phase (P1, P2), in such a way that a drive train (35) of the self-driving vehicle (1) is opened and/or any brakes (20) of the self-driving vehicle (1) are released.

4. Method according to any of the preceding claims, **characterized in that** the electronic drive system (3) and/or the electronic braking system (2) is or are specifically controlled, when the learning operating mode (EB) is activated, by a central control unit (5) in the first phase (P1) for a specified first period of time (dt1) and in the second phase (P2) for a specified second period of time (dt2) in order to set an internal force (F) which has the first force value (FW1), e.g. not equal to zero, in the first phase (P1), and an internal force (F) which has the second force value (FW1), e.g. zero, in the second phase (P2).

5. Method according to any of the preceding claims, **characterized in that** the electronic drive system (3) and/or the electronic braking system (3) is controlled, when the learning operating mode (EB) is activated for setting a first force value (FW1) and/or a second force value (FW2) not equal to zero in the relevant phase (P1, P2), in such a way that a drive force (FA) or a deceleration force (FV) acts on the self-driving vehicle (1) as the internal force (F).

6. Method according to any of the preceding claims, **characterized in that** in the first phase (P1), a first acceleration value (AW1) for the vehicle acceleration (A) is set due to the setting of the first force value (FW1) and the presence of a disturbing force (FS), and in the second phase (P2), a second acceleration value (AW2) for the vehicle acceleration (A) is set due to the setting of the second force value (FW2) and the presence of a disturbing force (FS).

7. Method according to claim 6, **characterized in that,** in order to determine the vehicle mass (M), an average mass value (MWM) characterizing the vehicle mass (M) is ascertained from single mass values (Mwi), at least one single mass value (Mwi) being assigned to each phase (P1, P2) in which the first force value (FW1) and/or the second force value (FW2) is not equal to zero, the single mass values (MWi) resulting from the first force value (FW1) or second force value (FW2) present in the relevant phase (P1, P2) and the first acceleration value (AW1) or second acceleration value (AW2) present in the relevant phase (P1, P2), taking into account a disturbing force value (FSW), the disturbing force value (FSW) characterizing the disturbing force (FS).

8. Method according to claim 7, **characterized in that** the disturbing force value (FSW)
- results from the first acceleration value (AW1) if the first force value (FW1) in the first phase (P1) is zero, or
- results from the second acceleration value (AW2) if the second force value (FW2) in the second phase (P1) is zero, or results from the first acceleration value (AW1) and the second acceleration value (AW2) if the first and the second force value (FW1, FW2) are not equal to zero.

9. Method according to claim 7 or claim 8, **characterized in that** a single mass value (MWi) is ascertained on the basis of a disturbing force value (FSW) which characterizes the disturbing force (FS) in a phase (P2, P1) which lies immediately before the phase (P1, P2) assigned to the single mass value (MWi).

10. Method according to any of claims 7 to 9, **characterized in that** the learning operating mode (EB) remains activated until single mass values (MWi) assigned to different phases (P1, P2) lie within a tolerance value (TW) around the average mass value (MWM).

11. Method according to any of claims 7 to 10, **characterized in that** the learning operating mode (EB) remains activated until disturbing force values (FSW) determined in different phases (P1, P2) deviate from each other by less than a limit value (GW).

12. Method according to any of the preceding claims, **characterized in that** the learning operating mode (EB) remains activated for at least two first phases (P1) and at least two second phases (P2), which alternate.

13. Method according to any of the preceding claims, **characterized in that** determining whether a trigger event (TE) is present is carried out on the basis of operating information (I) of the self-driving vehicle (1), the operating information (I) containing at least one element selected from the group consisting of:
- trailer status change information (11) indicating whether a trailer coupling (17) of the self-driving vehicle (1) has been switched between an open position (170) and a closed position (17G); and/or
- loading opening status change information (I2) indicating whether a loading opening (27) to a loading space (28) of the self-driving vehicle (1) has been opened or closed; and/or
- level change information (I3) indicating whether a distance between at least one of the vehicle axles (18) and a vehicle frame (13) of the self-driving vehicle (1) has changed; and/or
- planned load information (I4) indicating whether and when a load (19) should be picked up or delivered by the self-driving vehicle (1) as planned; and/or
- loading activity information (I5) indicating whether loading activities (LT) are perceived in a vicinity (U) of the self-driving vehicle (1), this taking place, for example, via a sensor arrangement (6) which, for example, has a camera (6a) via which loading activities (LT) in the vicinity (U) can be perceived; and/or
- loading loss information (I6) indicating whether an unwanted loss of a load (19) from the self-driving vehicle (1) was perceived, for example during the journey, this taking place, for example, via a sensor arrangement (6) which, for example, has a camera (6a) which can perceive a loss of the load (19) from the self-driving vehicle (1); and/or
- remote information (I7) indicating whether a pickup or delivery of a load (19) by the self-driving vehicle (1) was communicated wirelessly via a cloud system (C) or another wireless remote system (R); and/or
- position information (I8) indicating whether the self-driving vehicle (1) is outside public roads (Ö) (e.g. at a depot).

14. Method according to claim 13, **characterized in that** on the basis of the operating information (IB), it is assessed (STB) whether a change in the vehicle mass (M) is likely, and a trigger signal (ST) is issued if it is established that a change in the vehicle mass (M) is likely, the trigger signal (ST) being the basis on which it is determined whether a trigger event is present.

15. Central control unit (5) for carrying out a method according to any of the preceding claims.

16. Self-driving vehicle (1) which has a central control unit (5) according to claim 15, an electronic braking system (2) and an electronic drive system (3),
wherein the central control unit (5) is designed to control the electronic braking system (2) and the electronic drive system (3), when a trigger event (TE) is present, in an activated learning operating mode (EB) such that the self-driving vehicle (1) is operated alternately in a first phase (P1) and in a second phase (P2), wherein by automated control of the electronic drive system (3) and/or the electronic braking system (2) by the central control unit (5)
-- in the first phase (P1) an internal force (F) which has a first force value (FW1) can be set on the self-driving vehicle (1), and
-- in the second phase (P2) an internal force (F) which has a second force value (FW2) can be set on the self-driving vehicle (1), wherein the first force value (FW1) differs from the second force value (FW2); and
the central control unit (5) is designed to determine a disturbing force (FS) acting in the relevant phase (P1, P2) and to determine a vehicle mass (M) on the basis of the vehicle acceleration (A) and the internal force (F), which are each present in the relevant phase (P1, P2), as well as on the basis of the disturbing force (FS).

## Revendications

1. Procédé permettant de déterminer une masse de véhicule (M) d'un véhicule autonome (1), dans lequel une force interne (F) peut être exercée sur le véhicule autonome (1) par une commande automatisée d'un système d'entraînement électronique (3) présentant un entraînement (30) et/ou d'un système de freinage électronique (2) présentant des freins (20), comportant au moins les étapes suivantes :
- fait de constater si un événement déclencheur (TE) est présent, dans lequel l'événement déclencheur (TE) indique qu'une modification de la masse de véhicule (M) du véhicule autonome (1) est probable, et
- activation d'un mode de fonctionnement d'apprentissage (EB) en présence d'un événement déclencheur (TE) (STA), dans lequel le véhicule autonome (1) fonctionne en mode de fonctionnement d'apprentissage (EB) alternativement dans une première phase (P1) et dans une seconde phase (P2), dans lequel, par une commande automatisée du système d'entraînement électronique (3) et/ou du système de freinage électronique (2),
-- dans la première phase (P1), une force interne (F) comportant une première valeur de force (FW1), et
-- dans la seconde phase (P2), une force interne (F) comportant une seconde valeur de force (FW2)
est exercée sur le véhicule autonome (1), dans lequel la première valeur de force (FW1) est différente de la seconde valeur de force (FW2) ;
- détermination d'une force perturbatrice (FS) agissant dans les phases (P1, P2) ; et
- détermination de la masse de véhicule (M) (STE) en fonction d'une accélération de véhicule (A) et de la force interne (F), lesquelles sont respectivement présentes dans la phase (P1, P2) respective, ainsi qu'en fonction de la force perturbatrice (FS) déterminée.

2. Procédé selon la revendication 1, **caractérisé en ce que** la première valeur de force (FW1) dans la première phase (P1) ou la seconde valeur de force (FW2) dans la seconde phase (P2) est réglée sur zéro, de sorte que, dans la première phase (P1) ou dans la seconde phase (P2), seule une force perturbatrice (FS) agit sur le véhicule autonome (1).

3. Procédé selon la revendication 2, **caractérisé en ce que,** lorsque le mode de fonctionnement d'apprentissage (EB) est activé pour le réglage sur zéro d'une première valeur de force (FW1) ou d'une seconde valeur de force (FW2) dans la phase (P1, P2) respective, une commande automatisée du système d'entraînement électronique (3) et/ou du système de freinage électronique (2) est effectuée de telle sorte qu'une chaîne cinématique (35) du véhicule autonome (1) est ouverte et/ou que tous les freins (20) du véhicule autonome (1) sont desserrés.

4. Procédé selon l'une des revendications précédentes,
**caractérisé en ce que,** lorsque le mode de fonctionnement d'apprentissage (EB) est activé, le système d'entraînement électronique (3) et/ou le système de freinage électronique (2) sont commandés de manière ciblée par une unité de commande centrale (5) dans la première phase (P1) pendant une première période fixée (dt1) et dans la seconde phase (P2) pendant une seconde période fixée (dt2), afin de régler dans la première phase (P1) une force interne (F) comportant la première valeur de force (FW1), par exemple non nulle, et dans la seconde phase (P2) une force interne (F) comportant la seconde valeur de force (FW1), par exemple zéro.

5. Procédé selon l'une des revendications précédentes,
**caractérisé en ce que,** lorsque le mode de fonctionnement d'apprentissage (EB) est activé pour le réglage sur une valeur non nulle d'une première valeur de force (FW1) et/ou d'une seconde valeur de force (FW2) dans la phase (P1, P2) respective, le système d'entraînement électronique (3) et/ou le système de freinage électronique (3) sont commandés de telle sorte qu'une force d'entraînement (FA) ou une force de décélération (FV) agit sur le véhicule autonome (1) en tant que force interne (F).

6. Procédé selon l'une des revendications précédentes,
**caractérisé en ce que,** dans la première phase (P1), en raison du réglage de la première valeur de force (FW1) et de la présence d'une force perturbatrice (FS), une première valeur d'accélération (AW1) est réglée pour l'accélération de véhicule (A) et, dans la seconde phase (P2), en raison du réglage de la seconde valeur de force (FW2) et de la présence d'une force perturbatrice (FS), une seconde valeur d'accélération (AW2) est réglée pour l'accélération de véhicule (A).

7. Procédé selon la revendication 6, **caractérisé en ce que,** pour la détermination de la masse de véhicule (M), une valeur moyenne de masse (MWM) caractérisant la masse de véhicule (M) est définie à partir de valeurs individuelles de masse (MWi), dans lequel au moins une valeur individuelle de masse (MWi) est associée à chaque phase (P1, P2) dans laquelle la première valeur de force (FW1) et/ou la seconde valeur de force (FW2) sont non nulles, dans lequel les valeurs individuelles de masse (MWi) résultent de la première valeur de force (FW1) ou de la seconde valeur de force (FW2) présente dans la phase (P1, P2) respective et de la première valeur d'accélération (AW1) ou de la seconde valeur d'accélération (AW2) présente dans la phase (P1, P2) respective en tenant compte d'une valeur de force perturbatrice (FSW), dans lequel la valeur de force perturbatrice (FSW) caractérise la force perturbatrice (FS).

8. Procédé selon la revendication 7, **caractérisé en ce que** la valeur de force perturbatrice (FSW)
- résulte de la première valeur d'accélération (AW1) lorsque la première valeur de force (FW1) dans la première phase (P1) est nulle, ou
- résulte de la seconde valeur d'accélération (AW2) lorsque la seconde valeur de force (FW2) dans la seconde phase (P1) est nulle, ou résulte de la première valeur d'accélération (AW1) et de la seconde valeur d'accélération (AW2) lorsque la première et la seconde valeur de force (FW1, FW2) sont non nulles.

9. Procédé selon la revendication 7 ou 8, **caractérisé en ce qu**'une valeur unique de masse (MWi) est définie en fonction d'une valeur de force perturbatrice (FSW) qui caractérise la force perturbatrice (FS) dans une phase (P2, P1) qui précède immédiatement la phase (P1, P2) associée à la valeur unique de masse (MWi).

10. Procédé selon l'une des revendications 7 à 9, **caractérisé en ce que** le mode de fonctionnement d'apprentissage (EB) reste activé jusqu'à ce que des valeurs individuelles de masse (MWi) associées à différentes phases (P1, P2) soient comprises dans une valeur de tolérance (TW) autour de la valeur moyenne de masse (MWM).

11. Procédé selon l'une des revendications 7 à 10, **caractérisé en ce que** le mode de fonctionnement d'apprentissage (EB) reste activé jusqu'à ce que des valeurs de force perturbatrice (FSW) déterminées dans différentes phases (P1, P2) diffèrent de moins d'une valeur limite (GW) les unes des autres.

12. Procédé selon l'une des revendications précédentes,
**caractérisé en ce que** le mode de fonctionnement d'apprentissage (EB) reste activé pendant au moins deux premières phases (P1) et au moins deux secondes phases (P2) qui sont respectivement en alternance.

13. Procédé selon l'une des revendications précédentes,
**caractérisé en ce que** la détermination de la présence d'un événement déclencheur (TE) est mise en oeuvre en fonction d'informations de fonctionnement (I) du véhicule autonome (1), dans lequel les informations de fonctionnement (I) comprennent au moins un élément qui est choisi dans le groupe constitué de :
- une information de changement d'état de remorque (11) qui indique si un attelage de remorque (17) du véhicule autonome (1) a été commuté entre une position ouverte (170) et une position fermée (17G) ; et/ou
- une information de changement d'état d'ouverture de chargement (I2) qui indique si une ouverture de chargement (27) vers un espace de chargement (28) du véhicule autonome (1) a été ouverte ou fermée ; et/ou
- une information de changement de niveau (I3) qui indique si une certaine distance entre au moins l'un des axes de véhicule (18) et un châssis de véhicule (13) du véhicule autonome (1) a changé ; et/ou
- une information de chargement programmé (I4) qui indique si et quand une réception ou une distribution programmée d'un chargement (19) par le véhicule autonome (1) devrait avoir lieu ; et/ou
- une information d'activité de chargement (I5) qui indique si des activités de chargement (LT) sont perçues dans un environnement (U) du véhicule autonome (1), dans lequel ladite perception est effectuée par exemple par l'intermédiaire d'un système formant capteur (6) qui présente par exemple une caméra (6a) par l'intermédiaire de laquelle des activités de chargement (LT) peuvent être perçues dans l'environnement (U) ; et/ou
- une information de perte de chargement (I6) qui indique si une perte involontaire d'un chargement (19) a été perçue par le véhicule autonome (1), par exemple pendant la conduite, dans lequel ladite perception est effectuée par exemple par l'intermédiaire d'un système formant capteur (6) qui présente par exemple une caméra (6a) qui peut percevoir une perte du chargement (19) par le véhicule autonome (1) ; et/ou
- une information distante (I7) qui indique si une réception ou une distribution d'un chargement (19) par le véhicule autonome (1) a été communiquée sans fil par l'intermédiaire d'un système en nuage (C) ou d'un autre système distant (R) sans fil ; et/ou
- une information de position (I8) qui indique si le véhicule autonome (1) se trouve en dehors de la voie publique (Ö) (par exemple dans un dépôt).

14. Procédé selon la revendication 13, **caractérisé en ce que,** à l'aide des informations de fonctionnement (IB), on évalue (STB) si une modification de la masse de véhicule (M) est probable, et un signal de déclenchement (ST) est émis lorsqu'il a été constaté qu'une modification de la masse de véhicule (M) est probable, dans lequel on détermine à l'aide du signal de déclenchement (ST) si un événement de déclenchement est présent.

15. Unité de commande centrale (5) permettant de mettre en oeuvre un procédé selon l'une des revendications précédentes.

16. Véhicule autonome (1) comportant une unité de commande centrale (5) selon la revendication 15 et un système de freinage électronique (2) et un système d'entraînement électronique (3),
dans lequel l'unité de commande centrale (5) est configurée pour commander le système de freinage électronique (2) et le système d'entraînement électronique (3) en présence d'un événement déclencheur (TE) en mode de fonctionnement d'apprentissage (EB) activé de telle sorte que le véhicule autonome (1) fonctionne alternativement dans une première phase (P1) et dans une seconde phase (P2), dans lequel, par une commande automatisée du système d'entraînement électronique (3) et/ou du système de freinage électronique (2) par l'unité de commande centrale (5),
-- dans la première phase (P1), une force interne (F) comportant une première valeur de force (FW1) peut être réglée sur le véhicule autonome (1), et
-- dans la seconde phase (P2), une force interne (F) comportant une seconde valeur de force (FW2) peut être réglée sur le véhicule autonome (1), dans lequel la première valeur de force (FW1) est différente de la seconde valeur de force (FW2) ; et
l'unité de commande centrale (5) est configurée pour déterminer une force perturbatrice (FS) agissant dans la phase (P1, P2) respective et pour déterminer une masse de véhicule (M) en fonction de l'accélération de véhicule (A) et de la force interne (F), lesquelles sont respectivement présentes dans la phase (P1, P2) respective, ainsi que de la force perturbatrice (FS).
